Europäisches Patentamt

European Patent Office

Office européen des brevets

(19)

(11) **EP 0 559 114 B1**

(12) **EUROPÄISCHE PATENTSCHRIFT**

(45) Veröffentlichungstag und Bekanntmachung des
Hinweises auf die Patenterteilung:
**23.10.1996 Patentblatt 1996/43**

(51) Int. Cl.⁶: **B62D 7/15**, B62D 6/00
// B62D101/00, B62D111/00,
B62D113/00

(21) Anmeldenummer: **93103194.2**

(22) Anmeldetag: **28.02.1993**

(54) **Verfahren zum Lenken eines Strassenfahrzeugs mit Vorder- und Hinterradlenkung**

Process for steering a road vehicle with front and rear wheel steering

Procédé pour diriger un véhicule routier ayant les roues avant et arrière directrices

(84) Benannte Vertragsstaaten:
**FR GB IT SE**

(30) Priorität: **03.03.1992 DE 4206654**

(43) Veröffentlichungstag der Anmeldung:
**08.09.1993 Patentblatt 1993/36**

(73) Patentinhaber: **Deutsche Forschungsanstalt für
Luft- und Raumfahrt e.V.
51126 Köln (DE)**

(72) Erfinder: **Ackermann, Jürgen, Prof. Dr.
W-8036 Herrsching (DE)**

(74) Vertreter: **von Kirschbaum, Albrecht, Dipl.-Ing.
Patentanwalt,
Postfach 15 20
82102 Germering (DE)**

(56) Entgegenhaltungen:
WO-A-90/14980          DE-A- 3 831 932
DE-A- 4 028 320

- PROCEEDINGS OF THE 29TH IEEE
  CONFERENCE ON DECISON AND CONTROL;
  DECEMBER 5-7, 1990; HILTON HAWAIIAN
  VILLAGE, HONOLULU, HAWAI, USA Bd. 4 , IEEE
  CONTROL SYSTEMS SOCIETY Seiten 2033 -
  2034 J. ACKERMANN 'CAR STEERING BY YAW
  RATE CONTROL'
- PROCEEDINGS OF THE 31ST IEEE
  CONFERENCE ON DECISION AND CONTROL;
  DECEMBER 16-18, 1992; WESTIN LA PALOMA,
  TUCSON, ARIZONA, USA Bd. 3 , IEEE CONTROL
  SYSTEMS SOCIETY Seiten 2586 - 2590
  JUERGEN ACKERMANN 'ROBUST YAW
  DAMPING OF CARS WITH FRONT AND REAR
  WHEEL STEERING'
- IEEE TRANSACTIONS ON CONTROL SYSTEMS
  TECHNOLOGY Bd. 1, Nr. 1 , März 1993 , NEW
  YORK, US Seiten 15 - 20 JÜRGEN ACKERMANN;
  WOLFGANG SIEGEL 'Robust Yaw Damping of
  Cars with Front and Rear Wheel Steering'

EP 0 559 114 B1

**Beschreibung**

Die Erfindung betrifft ein Verfahren zum Lenken eines Straßenfahrzeugs mit Vorder- und Hinterradlenkung gemäß dem Oberbegriff des Anspruchs 1.

Das Lenkverhalten von Straßenfahrzeugen ist wesentlich durch die Dynamik der Gierbewegung gekennzeichnet, d.h. einer Drehbewegung um die Hochachse durch den Schwerpunkt des Fahrzeugs. Die Dynamik der Gierbewegung kann durch ein lineares System zweiter Ordnung modelliert werden. Hierbei hängt der Bewegungsverlauf entscheidend von der Dämpfung der Eigenwerte dieses Systems ab, was im folgenden kurz als "Gierdämpfung" bezeichnet wird. Die Gierdämpfung von Straßenfahrzeugen wiederum nimmt mit zunehmender Geschwindigkeit ab. (Siehe beispielsweise M. Mitschke, Dynamik der Kraftfahrzeuge, Band C, Fahrverhalten, 2.Auflage, Springer-Verlag 1990, S.58, Bild 12.2)

Eine zu geringe Gierdämpfung bei mittleren und höheren Geschwindigkeiten kann die Fahrsicherheit erheblich beeinträchtigen. Kritische Situationen treten beispielsweise auf, wenn das Fahrzeug von einem Seitenwind erfaßt wird, oder wenn die Lenkung durch Schlaglöcher oder Eis- und Schneereste gestört wird. Bedingt durch seine Reaktionszeit gelingt es dem Fahrer in solchen Fällen nicht immer, die unerwartet auftretende, schwach gedämpfte Gierbewegung zu stabilisiere. Ist damit erst einmal eine größere Gierbewegung entstanden, so können rasch die physikalischen Grenzen der seitlichen Reifenführungskrüfte überschritten werden.

Andererseits sollte die Gierdämpfung nicht zu groß sein, da die Fahrzeugreaktion sonst vom Fahrer als "träge" empfunden wird.

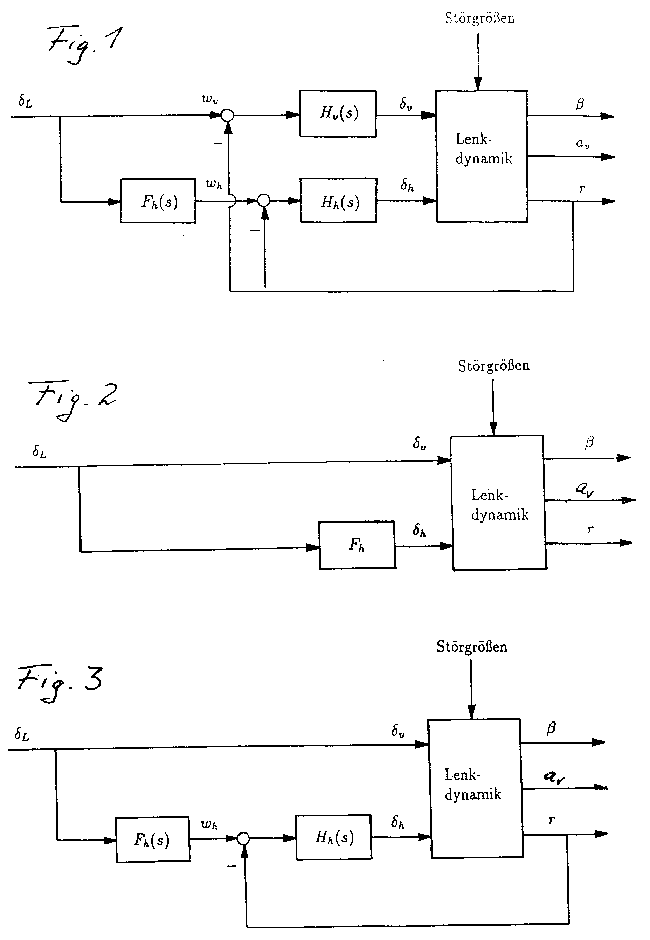

Es ist eine erste Generation allradgelenkter Fahrzeuge bekannt, welche noch ausschließlich gesteuert arbeitet; eine Struktur eines solchen allradgelenkten Fahrzeugs ist in dem Blockschaltbild der Fig.2 dargestellt. Hierbei bedeuten in Fig.2:

$\delta_v(\delta_h)$      Lenkwinkel vorn (hinten)

$\delta_L$      Lenkrad-Kommando (Lenkradwinkel x Lenkraduntersetzung)

$F_h$      Verstärkungsfaktor zur Ansteuerung der Hinterradlenkung

$\beta$      Schwimmwinkel

$r$      Giergeschwindigkeit

$a_v$      Querbeschleunigung der Vorderachse

Die mechanische Verbindung vom Lenkrad zum Lenkwinkel $\delta_v$ der Vorderräder ist unverändert. Der hintere Lenkwinkel $\delta_h$ ist im einfachsten Fall proportional zu dem Lenkwinkel $\delta_v$ gesteuert, d.h.

$$\delta_h = F_h \delta_v \qquad (1)$$

Üblicherweise wird der Verstärkungsfaktor $F_h$, das sogenannte "Lenkverhältnis", veränderlich gemacht, und zwar abhängig von am Fahrzeug gemessenen Größen, wie beispielsweise Fahrgeschwindigkeit, Giergeschwindigkeit, Querbeschleunigung. Anstelle eines Verstärkungsfaktors $F_h$ werden auch dynamische Vorfilter mit einer Übertragungsfunktion $F_h(s)$ verwendet. Hierbei ist mit dem Symbol s die komplexe Variable der Laplace-Transformation bezeichnet. In einem Aufsatz von E.Donges, R. Aufhammer, P. Fehrer und T. Seidenfuß "Funktion und Sicherheitskonzept der Aktiven Hinterachskinematik von BMW", Automobiltechnische Zeitschrift 1990, S. 580-587, ist die Übertragungsfunktion $F_h(s)$ in der folgenden Form angegeben:

$$F_h(s) = P_r \frac{1 + T_D s}{1 + T_1 s} \qquad (2)$$

Filterparamter $P_r$, $T_D$ und $T_1$ werden aus der Bedingung berechnet, daß ein Schwimmwinkel von null erreicht werden soll. Die vorstehend angeführten Filterparameter hängen von der Fahrgeschwindigkeit, der Fahrzeugmasse und den Schräglaufsteifigkeiten ab, die sich während des Betriebs des Fahrzeugs ändern. Beispielsweise sind die Filterparameter $T_D$ und $T_1$ proportional zur Fahrgeschwindigkeit v. Hierbei ist es Stand der Technik im Automobilbau, die Fahrzeuggeschwindigkeit v zu messen und zur Anpassung von Filterparametern während des Betriebs zu nutzen.

Eine zweite Generation von allradgelenkten Fahrzeugen benutzt eine unterlagerte Regelung für die Hinterradregelung, während die Vorderradlenkung noch konventionell ausgeführt ist. Ein Beispiel hierfür ist der Toyota Soarer, welcher seit April 1991 auf den japanischen Markt gebracht wird. (Siehe Hideo Inuoue, Hiroshi Harada und Yuiji Yokoja "Allradlenkung im Toyota Soarer", Tagung "Allradlenkung bei Personenwagen", Haus der Technik, Essen, 3.-4.12.91). Hierbei wird die Giergeschwindigkeit r mit einem verhältnismäßig preiswerten Vibrationskreisel gemessen und auf die Hinterradlenkung über einen dynamischen Regler mit einer Übertragungsfunktion $H_h(s)$ zurückgeführt. Das Symbol s ist auch in diesem Fall wieder die komplexe Variable der Laplace-Transformation. Es ergibt sich damit eine Struktur nach Fig.3. Die Führungsgröße $w_h$ des unterlagerten Regelkreises wird wiederum durch ein entsprechend der Geschwindigkeit angepaßtes Vorfilter $F_h(s)$ gebildet.

Durch die Rückführung der Giergeschwindigkeit r auf die Hinterradlenkung können die Eigenwerte der Lenkdynamik verändert werden, und der Einfluß externer Störgrößen, wie beispielsweise Seitenwind, Eis am Straßenrand, seitliche Fahrbahnneigung, u.ä., kann vermindert werden. Die Hinterradlenkung $H_h$ wird nunmehr auch aufgrund von externen Störungen betätigt und nicht nur aufgrund von Lenkrad-Kommandos, welche vom Fahrer gegeben werden. Der Kompensator $H_h(s)$ ist fahrzeugspezifisch ausgelegt, wobei ein befriedigender Kompromiß für verschiedene Fahrgeschwindigkeiten, Zuladungen und Kraftschlußverhältnisse zwischen den Reifen und der Straßenoberfläche gesucht werden muß.

Die eingeführten Kompromißzwänge werden erleichtert, wenn auch für die Vorderradlenkung eine unterlagerte Regelung vorgesehen wird. Es ergibt sich dann ein Blockschaltbild nach Fig.1. Ein Regler $H_v(s)$ für die Vorderradlenkung muß ebenfalls fahrzeugspezifisch ausgelegt werden. Eine solche Struktur des Lenkregelungssystems wird beispielsweise von El-Deen und A.Seirig, "Mechatronics for Cars: integrating machines and electronics to prevent skidding on icy roads", Computers in Mechanical Engineering 1987, S.10-22 beschrieben.

Durch die Verwendung von unterlagerten Regelkreisen setzt sich der Lenkwinkel eines Rades aus zwei Anteilen zusammen. Ein Anteil wird durch Lenkkommandos des Fahrers bewirkt, der andere Anteil durch äußere Störungen (Seitenwind, unebene Fahrbahn etc.). Prinzipiell können somit zwei Regelungsaufgaben unterschieden werden, nämlich

(a) eine automatische Regelung der Gierbewegung und
(b) eine Spurführungsregelung durch den Fahrer, bei der er die seitliche Abweichung von seinder geplanten Bahn mit der Lenkradbewegung klein hält. Für diese Spurführungsregelung ist insbesondere die "Lenkübertragungsfunktion" L(s) von Interesse, die den Zusammenhang zwischen dem Lenkkommando und der Querbeschleunigung an der Vorderachse beschreibt.

Die beiden Regelungsaufgaben sind jedoch bei dem Regelungssystem nach Fig.1 im allgemeinen stark miteinander verkoppelt. Sowohl beim Entwurf der beiden Regler $H_v(s)$ und $H_h(s)$ als auch bei ihrer Anpassung an die Betriebsbedingungen während der Fahrt bewirkt jede Änderung eines Regelparameters sowohl Änderungen der Lenkübertragungsfunktion als auch Änderungen der Gierdämpfung und Gierfrequenz.

Die beiden Regelungsaufgaben können durch eine unterlagerte Regelung der Vorderradlenkung mit

$$H_v(s) = l/s \tag{3}$$

voneinander entkoppelt werden, wie in den den Oberbegriff des Patentanspruches 1 offenbarenden "Proceedings of the 29th IEEE Conference on decision and control", Bd. 4, Seiten 2033-2034: J. Ackermann "car steering by yaw rate control" ausführlich dargelegt ist. Diese Entkopplung bewirkt, daß der Fahrer nur einen - an der Vorderachse gedachten - Massepunkt durch eine seitliche Beschleunigung $a_v$ der Vorderachse auf seiner geplanten Bahn halten muß. Die Gierbewegung wird hierbei automatisch geregelt und hat keinen Einfluß auf die Spurführungsaufgabe des Fahrers. Das entkoppelnde Regelgesetz hat somit im Gegensatz zu allen vorher bekannten Reglern nicht fahrzeugspezifisch ausgelegt zu werden; vielmehr ist es durch Gl.(3) eindeutig bestimmt. Diese Entkopplung ist die Grundlage für eine gezielte Veränderung der Gierdynamik ohne gleichzeitigen Einfluß auf die Lenkübertragungsfunktion.

Nachteilig bei allen vorstehend angeführten Lenk-Regelungssystemen ist, daß sich die Gierdämpfung mit der Fahrgeschwindigkeit ändert. Da jedoch eine geringe Dämpfung die Fahrsicherheit beeinträchtigt, ist es besonders kritisch, daß die Gierdämpfung mit zunehmender Geschwindigkeit abnimmt.

Aufgabe der Erfindung ist es daher, ein Verfahren zum Lenken eines Straßenfahrzeugs mit Vorderrad- und Hinterradlenkung zu schaffen, bei welchem die Gierdämpfung von der Fahrgeschwindigkeit unabhängig gemacht wird und damit die Möglichkeit geschaffen wird, daß ein günstiger Wert der Gierdämpfung im gesamten Geschwindigkeitsbereich erreicht wird.

Gemäß der Erfindung ist dies bei einem Verfahren zum Lenken eines Straßenfahrzeugs mit Vorder- und Hinterradlenkung nach dem Oberbegriff des Anspruchs 1 durch die Merkmale im kennzeichnenden Teil des Anspruchs 1 erreicht. Eine vorteilhafte Weiterbildung ist Gegenstand des Unteranspruchs.

Durch die Entkopplung in der Vorderradlenkung nach Gl.(3) kann das Teilsystem zweiter Ordnung, aus welchem sich die Gierdämpfung $D_G$ ergibt, für sich analysiert werden. Diese Analyse führt auf eine spezielle Struktur für den Regler $H_h(s)$ mit einer Verstärkungsanpassung durch die Fahrgeschwindigkeit v. Der Regler $H_h(s)$ enthält zunächst einen einzigen freien Parameter, nämlich den Dämpfungsparameter $k_D$. (Er wird zunächst, solange $k_D$ noch nicht bestimmt ist, als "struktureller Regleransatz" bezeichnet). Diese Reglerstruktur hat die nachstehend angeführten Eigenschaften:

(a) Die Gierdämpfung $D_G$ wird unabhängig von der Fahrgeschwindigkeit und

(b) der Zahlenwert der Gierdämpfung $D_G$ läßt sich durch die Wahl des Dämpfungsparameters $k_D$ derart einstellen, daß eine Verstellung des Dämpfungsparameters $k_D$ keinen Einfluß auf andere Eigenschaften der Lenkdynamik hat, so beispielsweise auf die natürliche Frequenz der Gierbewegung oder auf die Lenkübertragungsfunktion vom Lenkrad zur seitlichen Beschleunigung der Vorderachse.

Nachfolgend wird die Erfindung unter Bezugnahme auf die anliegenden Zeichnungen im einzelnen erläutert. Hierbei zeigen:

Fig.1  ein Blockschaltbild einer Struktur einer Allrad-Lenkung mit einer unterlagerten Rückführung der Giergeschwindigkeit auf Vorderrad- und Hinterradlenkung;

Fig.2  ein Blockschaltbild einer herkömmlich gesteuerten Allrad-Lenkung, welche noch ausschließlich gesteuert arbeitet, und

Fig.3  ein Blockschaltbild einer herkömmlichen Allrad-Lenkung mit unterlagerter Rückführung der Giergeschwindigkeit nur auf die Hinterradlenkung.

Ein System zur Durchführung und Realisierung des erfindungsgemäßen Verfahrens kann weitgehend aus handelsüblichen Komponenten aufgebaut werden, indem insbesondere zur Messung von Fahrgeschwindigkeit, Giergeschwindigkeit und Lenkradwinkel handelsübliche Sensoren verwendet werden. Als Stellglieder für die Lenkung der Vorder- und Hinterräder können hydraulische oder elektrische Antriebe verwendet werden, wie sie serienmäßig in den allradgelenkten Fahrzeugen der Firmen Nissan, Toyota, Mitsubishi, Mazda, Honda, Daihatsu und BMW eingesetzt werden. In Deutschland gibt es konkurrierende Entwicklungslinien der Firmen Siemens/Rexroth, Bosch und Zahnradfabrik Friedrichshafen (siehe hierzu die Vortäge bei der Tagung Allradlenksysteme bei Personenwagen, Haus der Technik, Essen 3. - 4.12.1991). Das neue Verfahren zur geschwindigkeitsunabhängigen Gierdämpfung wird durch Verbindung bekannter Komponenten mit Hilfe einer neuartigen Reglerstruktur realisiert. Die hierbei erforderlichen Rechenoperationen des Reglers werden in einem Mikroprozessor ausgeführt.

In der Patentanmeldung P 40 28 320.8-21 ist für ein Fahrzeug mit einer entkoppelnden Lenkregelung entsprechend Gl.(3) folgende, dort als Gl.(23) bezeichnete Zustandsdarstellung angegeben:

$$\begin{bmatrix} \dot{a}_v \\ \dot{r} \\ \dot{\delta}_v \end{bmatrix} = \begin{bmatrix} d_{11} & 0 & 0 \\ d_{21} & d_{22} & d_{23} \\ 0 & -1 & 0 \end{bmatrix} \begin{bmatrix} a_v \\ r \\ \delta_v \end{bmatrix} + \begin{bmatrix} c \\ 0 \\ 1 \end{bmatrix} w_v \qquad (4)$$

(Die Führungsgröße $w_v$ in der Zustandsdarstellung Gl.(4) ist in der älteren Patentanmeldung als $r_{soll}$ bezeichnet.) Im übrigen bedeuten die vorstehend angeführten Zustandsgrößen:

$a_v$     Querbeschleunigung der Vorderachse
$r$     Giergeschwindigkeit
$\delta_v$     Lenkwinkel vorn

Die einzelnen Koeffizienten des Modells sind

$c$          $= c_v \ell / m \ell_h$
$d_{11}$     $= -c/v$
$d_{21}$     $= (c_h \ell_h - c_v \ell_v)/m \ell_v \ell_h$
$d_{22}$     $= -c_h \ell / m v \ell_v$
$d_{23}$     $= c_h / m \ell_v$

in welchen wiederum bedeuten:

$c_v (c_h)$          Schräglaufsteifigkeit vorn (hinten)

$\ell_v(\ell_h)$          Schwerpunktabstand von der Vorder-(Hinter-) Achse

$\ell$          Radstand ($\ell = \ell_v + \ell_h$)

m          Fahrzeugmasse (durch Kraftschlußkoeffizienten $\mu$ normiert)

v          Fahrgeschwindigkeit

Durch Entkopplung zerfällt das Modell gemäß Gl.(4) in zwei Teilmodelle:

$$\dot{a}_v = d_{11}a_v + cw_v \tag{5}$$

und

$$\begin{bmatrix} \dot{r} \\ \dot{\delta}_v \end{bmatrix} = \begin{bmatrix} d_{22} & d_{23} \\ -1 & 0 \end{bmatrix} \begin{bmatrix} r \\ \delta_v \end{bmatrix} + \begin{bmatrix} d_{21} \\ 0 \end{bmatrix} a_v + \begin{bmatrix} 0 \\ 1 \end{bmatrix} w_v \tag{6}$$

Durch Gl.(6) ist die Gierbewegung beschrieben; das charakteristische Polynom hierfür ist:

$$P_e(s) = s(s - d_{22}) + d_{23} \tag{7}$$

$$= \frac{c_h}{m\ell_v} + \frac{c_h \ell}{mv\ell_v} s + s^2$$

Durch Vergleich mit der Formel

$$P_e(s) = \omega_e^2 + 2D_e \omega_e s + s^2 \tag{8}$$

werden die natürliche Frequenz $\omega_e$ und die Dämpfung $D_e$ erhalten:

$$\omega_e = \sqrt{\frac{c_h}{m\ell_v}} \tag{9}$$

$$D_e = \frac{\ell}{2v} \sqrt{\frac{c_h}{m\ell_v}} \tag{10}$$

Durch die entkoppelnde Regelung der Vorderräder nimmt die Gierdämpfung den Wert $D_G = D_e$ an.

Mit wachsender Fahrgeschwindigkeit v nimmt somit die Gierdämpfung $D_G$ ab. Dieser Effekt kann jedoch nur in sehr engen Grenzen durch einen langen Radstand $\ell$ ausgeglichen werden.

Durch Verwendung der Hinterradlenkung wird nunmehr die Gierdämpfung $D_G$ unabhängig von der Fahrgeschwindigkeit v gemacht. Hierzu muß zunächst das Teilmodell gemäß Gl.(6) durch die zusätzliche Stellegröße Hinterrad-Lenkwinkel $\delta_h$ erweitert werden:

$$\begin{bmatrix} \dot{r} \\ \dot{\delta}_v \end{bmatrix} = \begin{bmatrix} d_{22} & d_{23} \\ -1 & 0 \end{bmatrix} \begin{bmatrix} r \\ \delta_v \end{bmatrix} + \begin{bmatrix} d_{21} \\ 0 \end{bmatrix} a_v + \begin{bmatrix} 0 \\ 1 \end{bmatrix} w_v + \begin{bmatrix} b_{22} \\ 0 \end{bmatrix} \delta_h \tag{11}$$

Wie in der älteren Patentanmeldung durch Gl.(23) angegeben, ist der Koeffizient $b_{22}$ :

$$b_{22} = -c_h/m\ell_v \tag{12}$$

Den Kerngedanken bezüglich einer Dämpfung der Gierbewegung stellt der folgende, strukturelle Regleransatz dar:

$$\delta_h = (\ell/v - k_D)(w_h - r) \tag{13}$$

$w_h$ ist hierbei die Führungsgröße des unterlagerten Regelkreises für die Hinterradlenkung, wie aus Fig.1 zu ersehen ist. Die Größen Radstand $\ell$, Fahrgeschwindigkeit v und Giergeschwindigkeit r wurden bereits eingeführt, $k_D$ ist der einzige noch zu bestimmende Regelparameter. Im weiteren wird gezeigt daß

(a) der Reglerparameter $k_D$ in einem einfachen Zusammenhang mit der Gierdämpfung $D_G$ steht und
(b) die Gierfrequenz aufgrund des Ansatzes (13) nicht von $k_D$ abhängt,
(c) die Gierdämpfung $D_G$ von der Fahrgeschwindigkeit unabhängig geworden ist.

Durch Einsetzen von Gl.(13) in Gl.(11) wird erhalten:

$$\begin{bmatrix} \dot{r} \\ \dot{\delta}_v \end{bmatrix} = \begin{bmatrix} d_{22} - (\ell/v - k_D)b_{22} & d_{23} \\ -1 & 0 \end{bmatrix} \begin{bmatrix} r \\ \delta_v \end{bmatrix} + \begin{bmatrix} d_{21} \\ 0 \end{bmatrix} a_v + \begin{bmatrix} 0 & (\ell/v - k_D)b_{22} \\ 1 & 0 \end{bmatrix} \begin{bmatrix} w_v \\ w_h \end{bmatrix}$$

$$= \begin{bmatrix} -k_D c_h/m\ell_v & c_h/m\ell_v \\ -1 & 0 \end{bmatrix} \begin{bmatrix} r \\ \delta_v \end{bmatrix} + \begin{bmatrix} d_{21} \\ 0 \end{bmatrix} a_v + \begin{bmatrix} 0 & (\ell/v - k_D)b_{22} \\ 1 & 0 \end{bmatrix} \begin{bmatrix} w_v \\ w_h \end{bmatrix}$$

$$(14)$$

Das charakteristische Polynom ist nun

$$P_g(s) = \frac{c_h}{m\ell_v} + \frac{k_D c_h}{m\ell_v} s + s^2 \tag{15}$$

$$= \omega_g^2 + 2D_g \omega_g + s^2$$

Die Dämpfung $D_g$ ist

$$D_g = \frac{k_D}{2} \sqrt{\frac{c_h}{m\ell_v}} \tag{16}$$

Die Gierdämpfung $D_G$ nimmt als jetzt den Wert $D_g$ an und ist von der Fahrgeschwindigkeit v unabhängig. Die Gierfrequenz $\omega_g$ ist unverändert, d.h. $\omega_g = \omega_e$. Sie wird durch eine Veränderung des Parameters $k_D$ nicht beeinflußt. Nach Gl.(16) ergibt sich der Dämpfungsparameter $k_D$ des Reglers zu

$$k_D = 2D_G \sqrt{\frac{m\ell_v}{c_h}} \tag{17}$$

Der Dämpfungsparameter $k_D$ kann aus der gewünschten Dämpfung $D_G$ bestimmt werden. Als günstig wird beispielsweise eine Dämpfung $D_G = 1/\sqrt{2}$ angesehen. Hieraus ergibt sich dann für den Dämpfungsparameter $k_D$:

$$k_D = \sqrt{\frac{2m\ell_v}{c_h}} \tag{18}$$

Wird der Dämpfungsparameter $k_D$ von dem Fahrer während der Fahrt verändert, so ändert sich damit weder die Gierfrequenz $\omega_g$ noch die Lenkübertragungsfunktion vom Lenkrad zur seitlichen Beschleunigung der Vorderachse, wie sich aus dem durch entkoppelnde Regelung der Vorderradlenkung entstandenen Teilsystem gemäß Gl.(5) ergibt. Diese Aussagen gelten unter der Annahme einer Massenverteilung, welche konzentrierten Massen an Vorder- und Hinterachse entsprechen. Bei abweichender Massenverteilung ergeben sich Abweichungen vom dargestellten Idealfall.

Nach einer entsprechenden Wahl des Dämpfungsparameters $k_D$ kann der Regleransatz gemäß Gl.(13) mit üblichen technischen Mitteln in einem Mikroprozessor verwirklicht werden. Hierbei ist der Radstand $\ell$ bekannt; die Messung der Fahrgeschwindigkeit v und deren Verwendung zur Anpassung von Filterparametern wird im Automobilbau bereits angewendet, beispielsweise beim BMW 850i mit Allradlenkung; die Giergeschwindigkeit r kann, wie beispielsweise im Toyota Soarer, mit einem Vibrationskreisel gemessen werden, so daß vom Mikroprozessor nur noch die vier Grundrechenoperationen entsprechend Gl.(13) durchzuführen sind.

Da sich der Dämpfungsparameter $k_D$ gezielt nur auf die Gierdämpfung auswirkt und insbesondere nicht auf die Lenkübertragungsfunktion, ist es ohne Sicherheitsrisiko, $k_D$ während der Fahrt zu verstellen. Dieses kann entweder durch den Fahrer geschehen, z.B. durch einen "Komfortabel-Sportlich-Schalter", oder automatisch in Abhängigkeit vom Lenkradwinkel, von der Giergeschwindigkeit oder anderen im Fahrzeug gemessenen Größen.

**Patentansprüche**

1. Verfahren zum Lenken eines Straßenfahrzeugs mit Vorder- und Hinterradlenkung, das einen Radstand $\ell$, eine hintere Schräglaufsteifigkeit $c_h$, einen Schwerpunktabstand $\ell_v$ von der Vorderachse und eine Masse m hat,
und bei welchem Verfahren durch eine integrierende Rückführung eines gemessenen Giergeschwindigkeitssignals auf die Vorderradlenkung die Gierbewegung von der Seitenbewegung der Vorderachse entkoppelt wird, und
die Eigenwerte der Gierbewegung durch Rückführung des gemessenen Giergeschwindigkeitssignals auf die Hinterradlenkung so verschoben werden, daß die Wahl der Giereigenwerte keinen Einfluß auf die Lenkübertragungsfunktion vom Lenkrad zur Seitenbewegung der Vorderachse hat,
dadurch **gekennzeichnet**, daß für eine gewünschte Gierdämpfung $D_G$ ein Dämpfungsparameter $k_D$ durch

$$k_D = 2\,D_G \sqrt{\frac{m \cdot \ell_v}{c_h}}$$

vorgegeben wird, wobei $k_D$ in s, $c_h$ in N/rad, $\ell_v$ in m und m in kg ausgedrückt sind,
daß die Giergeschwindigkeit r, Fahrgeschwindigkeit v und Lenkradwinkel $\delta_L$ gemessen werden,
daß eine Führungsgröße $w_h$ aus dem gemessenen Lenkradwinkel ($\delta_L$) durch ein der Hinterradlenkung zugeordnetes Vorfilter ($F_h$) gebildet wird und ein Hinterradlenkwinkel $\delta_h$

$$\delta_h = (\ell/v - k_D)(w_h - r)$$

mittels eines Mikroprozessors berechnet wird, wobei $\delta_h$ und $\delta_L$ in rad, $\ell$ in m, v in m/s, $k_D$ in s, $w_h$ und r in rad/s sind, und
daß die Hinterräder um den Winkel $\delta_h$ gelenkt werden.

2. Verfahren nach Anspruch 1, dadurch **gekennzeichnet**, daß der Dämpfungsparameter ($k_D$) während der Fahrt von Hand durch den Fahrer oder automatisch in Abhängigkeit von im Fahrzeug gemessenen Größen verstellt wird.

**Claims**

1. A method of steering a road vehicle having front-wheel and rear-wheel steering, comprising a wheel base $\ell$, a rear cornering stiffness $c_h$, a centre of gravity distance $\ell_v$ from the front axle and a mass m,
and in which method by an integrating feedback of a measured yaw rate signal to the front-wheel steering the yaw motion is decoupled from the lateral motion of the front axle, and
the eigenvalues of the yaw motion are shifted by feedback of the measured yaw rate signal to the rear-wheel steering in such a manner that the choice of the yaw eigenvalues has no influence on the steering transfer function from the steering wheel to the lateral motion of the front axle,
**characterized** in that for a desired yaw damping $D_G$ a damping parameter $k_D$ is predetermined by

$$k_D = 2\,D_G \sqrt{\frac{m \cdot \ell_v}{c_h}}$$

wherein are expressed $k_D$ in s, $c_h$ in N/rad, $\ell_v$ in m and m in kg,
that the yaw rate r, the traveling velocity v and the steering wheel angle $\delta_L$ are measured,
that a command variable $w_h$ is formed from the measured steering wheel angle ($\delta_L$) by a prefilter ($F_h$) associated with the rear-wheel steering, and a rear-wheel steering angle $\delta_h$

$$\delta_h = (\ell/v - k_D)(w_h - r)$$

is calculated by means of a microprocessor, wherein are expressed $\delta_n$ and $\delta_L$ in rad, $\ell$ in m, v in m/s, $k_D$ in s, $w_n$ and r in rad/s, and

that the rear wheels are steered with the angle $\delta_h$.

2. A method according to claim 1, **characterized** in that the damping parameter ($k_D$) is adjusted during travelling by hand by the driver or automatically in dependence upon variables measured in the vehicle.

**Revendications**

1. Procédé pour conduire un véhicule routier comportant un système de direction des roues avant et un système de direction des roues arrière, et qui comporte un empattement l, un taux de dérive oblique $c_h$, une distance $l_v$ entre le centre de gravité et l'essieu avant et une masse m, et
selon lequel le mouvement de lacet est découplé du déplacement latéral de l'essieu avant au moyen d'un renvoi, avec intégration, d'un signal de vitesse de lacet mesuré au système de direction des roues avant, et
les valeurs propres du mouvement de lacet sont décalées au moyen d'un renvoi du signal de vitesse de lacet mesuré au système de direction des roues arrière, de telle sorte que le choix des valeurs propres de lacet n'a aucune influence sur la fonction de transfert de direction du volant au déplacement latéral de l'essieu avant, caractérisé en ce que pour un amortissement désiré $D_G$ de l'effet de lacet, un paramètre d'amortissement $k_D$ est prédéterminé par

$$k_D = 2\,D_G\,\sqrt{\frac{m.\,l_v}{c_h}}$$

$k_D$ étant exprimé en s, $c_h$ en N/radian, $l_v$ en m et m en kg, qu'on mesure la vitesse de lacet r, la vitesse de déplacement v et l'angle $\delta_L$ du volant,
qu'on forme une grandeur pilote $w_h$ à partir de l'angle mesuré ($\delta_L$) du volant, au moyen d'un filtre amont ($F_h$) associé au système de direction des roues arrière, et qu'un angle $\delta_h$ du braquage des roues arrière

$$\delta_h = (l/v - k_D)\,(w_h - r)$$

est calculé à l'aide d'un microprocesseur, $\delta_h$ et $\delta_L$ étant exprimés en radians, l en m, v en m/s, $k_D$ en s, $w_h$ et r en radians/s, et
que les roues arrière sont braquées sur l'angle $\delta_h$.

2. Procédé selon la revendication 1, caractérisé en ce que le paramètre d'amortissement ($k_D$) est réglé, pendant le déplacement, manuellement par le conducteur ou automatiquement en fonction de grandeurs mesurées dans le véhicule.

Fig. 1

Fig. 2

Fig. 3